# EUROPÄISCHE PATENTANMELDUNG

(11) **EP 1 925 867 A1**
(43) Veröffentlichungstag der Anmeldung: **28.05.2008**
(21) Anmeldenummer: 07117210.0
(22) Anmeldetag: 26.09.2007
(51) Int. Cl.: F16L 13/14

(54) **Lötlose Rohrverbindung**

(30) Priorität: 01.11.2006 DE 102006051945
(71) Anmelder: ContiTech Techno-Chemie GmbH, 61184 Karben (DE)
(72) Erfinder: Zahradnik, Stefan, 63679 Schotten-Michelbach (DE); Sadowski, Nikolaus, 61118 Bad Vilbel (DE)
(74) Vertreter: Finger, Karsten

(57) **Zusammenfassung**

Die Erfindung betrifft eine formschlüssige Verbindung eines plastisch verformbaren Rohres (10) mit einem mindestens eine Bohrung (7, 8) aufweisenden Anschlussstutzen (1, 2), bei der das Rohr (10) durch plastische Aufweitung in der Bohrung (7, 8) festgelegt ist. In der Bohrung (7, 8) vorspringende Nasen (9) sind dabei in die Rohrwandung eingepresst und erhöhen die Festigkeit der Verbindung gegen axiale Verschiebung und Verdrehung.

## Beschreibung

Die Erfindung betrifft eine formschlüssige Verbindung eines plastisch verformbaren Rohres mit einem mindestens eine Bohrung aufweisenden Anschlussstutzen.

Derartige Verbindungen sind an sich bekannt und werden häufig dort eingesetzt, wo beispielsweise aufgrund der Materialpaarung oder aus Gründen der Fertigkeit, thermische Verbindungsverfahren wie Löten nicht anwendbar sind. Dabei wird das Rohr durch plastisches Aufweiten formschlüssig in dem Anschlussstutzen festgelegt. Derartige Verbindungen sind beispielsweise in der DE 29 45 474 C2 der DE 25 57 625 oder der US 2,099,026 offenbart.

Um die Dauerfestigkeit der Verbindung vor allem bei Verwendung von Kunststoffrohren zu verbessern, wird in der DE 79 31 114 U1 vorgeschlagen, den Anschlussstutzen im "inneren Einsteckbereich" mit einer Anzahl von Ringnuten zu versehen, wobei beim Aufweiten des Kunststoffrohres das Material des Rohres, unterstützt durch eine metallene Stützhülse, in die Nuten gepresst wird. Dadurch soll ein Lösen der Verbindung durch das unter Druck nicht zu vermeidende Fließen des Kunststoffmaterial verhindert werden.

Allen diesen Lösungen ist jedoch der Nachteil gemeinsam, dass die Verbindungen zwar eine durch den Formschluss bedingte hohe Festigkeit aufweisen, gegen Verdrehungen des Rohres gegen den Stutzen bei starken Beanspruchungen aber nicht immer ausreichend gesichert sind.

In der JP 10 22 0 660A ist eine gattungsgemäße Verbindung gezeigt, bei der ein Rohr durch Aufweitung in axiale Nuten einer Flanschbohrung gepresst ist. Die axiale Festigkeit wird durch angestauchte Bunde des Rohres hergestellt. Hier sind jedoch neben dem Aufweiten noch weitere Arbeitsgänge notwendig.

Der Erfindung liegt die Aufgabe zugrunde, eine Verbindung der eingangs genannten Art zu schaffen, die ohne thermische Verfahren in einem Arbeitsgang herstellbar ist und neben einer hohen axialen Festigkeit auch eine hohe Verdrehsicherung aufweist, ohne dass hohe Umformgrade des Rohres notwendig sind.

Diese Aufgabe wird dadurch gelöst, dass die Bohrung des Anschlussstutzens radial nach innen ragende Nasen aufweist und das in der Bohrung steckende Rohr durch einen Aufweitvorgang derart plastisch verformt ist, dass zwischen der Wandung des Rohres und der Bohrung des Anschlussstutzens eine reibkraftschlüssige, feste und unlösbare Verbindung besteht, wobei die Nasen der Bohrung des Anschlussstutzens in die aufgeweitete Wand des Rohres eingepresst sind.

Diese Verbindung ist durch einen einzigen Aufweitvorgang herstellbar. Die in die Wand des Rohres eingepressten Nasen sichern die Verbindung sowohl gegen axiale Verschiebungen als auch gegen Verdrehungen zusätzlich ab.

Im Gegensatz zu axialen Nuten oder Nuten in Umfangsrichtung sind nur geringe Umformgrade des Rohres notwendig, da das Material nicht in Nuten einfließen muss.

In einer Weiterbildung der Erfindung sind die Nasen in Umfangsrichtung in der Bohrung derart beabstandet, dass die Abstände zwischen den Nasen gleich oder größer sind als die Ausdehnung der Nasen in Umfangsrichtung.

Diese Anordnung hat den Vorteil, dass bei fest eingepresstem Rohr die zwischen den Nasen an der Bohrung anliegende Rohrwand auch bei hoher Torsionsbelastung nicht abgeschert wird. Außerdem sind Spannungsspitzen zwischen den Nasen dadurch geringer, was zu einer geringen Kerbwirkung und damit höheren Dauerfestigkeit der Verbindung führt.

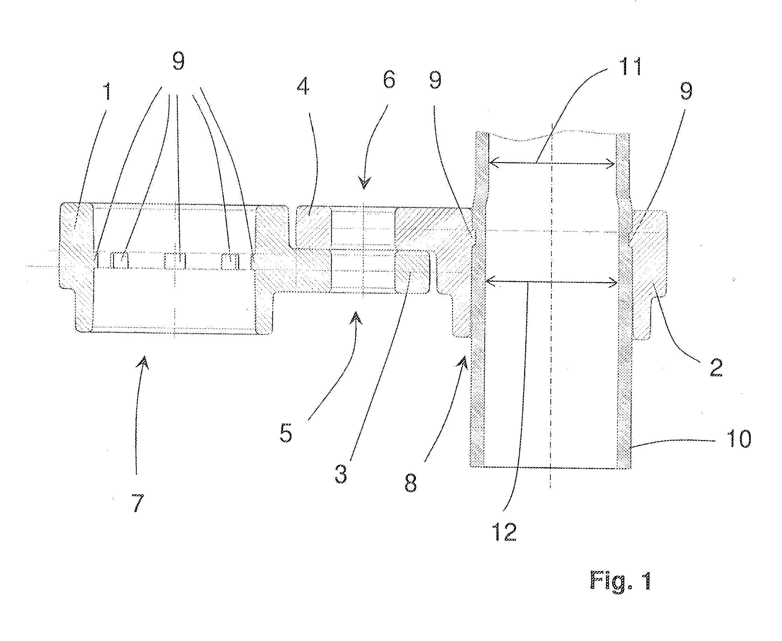

Anhand der Zeichnung wird nachstehend ein Beispiel der Erfindung näher erläutert.

Die einzige Figur zeigt zwei Flansche 1 und 2, die über jeweils einen Befestigungsarm 3 und 4 mit je einer Bohrung 5 und 6 an einem nicht gezeigten Gegenstand befestigbar sind. Die Flansche 1 und 2 weisen jeweils eine Hauptbohrung 7 und 8 auf.

Die Hauptbohrungen 7 und 8 weisen jeweils radial nach innen vorspringende Nasen 9 auf.

In der Hauptbohrung 8 ist ein Rohrabschnitt 10 eingepresst, wobei die Einpressung dadurch realisiert ist, dass das Rohr 10 von seinem ursprünglichen Durchmesser 11 im Bereich der Hauptbohrung 8 auf einen Durchmesser 12 aufgeweitet ist. Dadurch ist das Rohr 10 in der Hauptbohrung 8 mittels Reibkraftschluss axial und radial festgelegt.

Durch die Aufweitung des Rohres 10 legt sich die Rohrwandung an die Bohrung 8 an. Dabei pressen sich die Nasen 9 in die Rohrwandung ein und bieten so eine hohe zusätzliche Sicherheit gegen axiale Verschiebungen oder Verdrehungen des Rohres 10 gegen den Flansch 2. Die dabei auftretenden zusätzlichen Verformungsgrade sind gering, so dass die Dauerfestigkeit der Verbindung nicht negativ beeinflusst ist.

### Bezugszeichenliste

### (Teil der Beschreibung)

- 1, 2: Flansche
- 3, 4: Befestigungsarme der Flansche 1, 2
- 5, 6: Bohrungen der Befestigungsarme 3, 4
- 7: Hauptbohrung des Flansches 1
- 8: Hauptbohrung des Flansches 2
- 9: Nasen
- 10: Rohr
- 11: Durchmesser des Rohres 1 vor der Aufweitung
- 12: Durchmesser des Rohres 1 nach der Aufweitung

## Patentansprüche

1. Formschlüssige Verbindung eines plastisch verformbaren Rohres (10) mit einem mindestens eine Bohrung (7, 8) aufweisenden Anschlussstutzen (1,2), **dadurch gekennzeichnet, dass** die Bohrung (7, 8) des Anschlussstutzens (1, 2) radial nach innen ragende Nasen (9) aufweist und das in der Bohrung (7, 8) steckende Rohr (10) durch einen Aufweitvorgang derart plastisch verformt ist, dass zwischen der Wandung des Rohres (10) und der Bohrung (7, 8) des Anschlussstutzens (1, 2) eine reibkraftschlüssige, feste und unlösbare Verbindung besteht, wobei die Nasen (9) der Bohrung (7, 8) des Anschlussstutzens (1, 2) in die aufgeweitete Wand des Rohres (10) eingepresst sind.

2. Formschlüssige Verbindung nach Anspruch 1, **dadurch gekennzeichnet, dass** die Nasen (9) in Umfangsrichtung in der Bohrung (7, 8) derart beabstandet sind, dass die Abstände zwischen den Nasen (9) gleich oder größer sind als die Ausdehnung der Nasen (9) in Umfangsrichtung.
